# EUROPÄISCHE PATENTANMELDUNG

(11) **EP 1 729 191 A1**
(43) Veröffentlichungstag der Anmeldung: **06.12.2006**
(21) Anmeldenummer: 05007417.8
(22) Anmeldetag: 05.04.2005
(51) Int. Cl.: G05B 19/05, G05B 17/02, G06Q 90/00

(54) **Entwurfsvorrichtung zum Entwerfen einer leittechnischen Anlage und Verfahren zum Überprüfen der technologischen Aufgabenstellung beim Entwurf einer leittechnischen Anlage**

(71) Anmelder: SIEMENS AKTIENGESELLSCHAFT, 80333 München (DE)
(72) Erfinder: Degen, Alfred, 91058 Erlangen (DE); Deutel, Franz, 91088 Bubenreuth (DE); Fischer, Horst, 90475 Nürnberg (DE); Humpert, Hans-Dieter, 91334 Hemhofen (DE); Jäckisch, Horst, 90766 Fürth (DE); Kleyer, Dieter, 91074 Herzogenaurach (DE); Schmidt, Günter, 90429 Nürnberg (DE); Schultze, Wilhelm, 91056 Erlangen (DE); Spiska, Christian, 91096 Möhrendorf (DE)

(57) **Zusammenfassung**

Entwicklungsvorrichtung zum Entwerfen einer leittechnischen Anlage mit Automatisierungssoftware und -hardware zum automatisierten Betrieb eines Prozesses, wobei die Entwurfsvorrichtung
- ein zum Entwurf der Automatisierungssoftware ausgebildetes Entwurfsmodul (10),
- ein mit dem Entwurfsmodul (10) zum Empfang der Automatisierungssoftware verbundenes Engineering-Modul (30), welches zum Projektieren der Automatisierungshardware auf der Basis der Automatisierungssoftware und zum Ausgeben von Projektierungsdaten an die Automatisierungshardware ausgestaltet ist, und
- ein zum Simulieren der Automatisierungshardware und des Prozesses ausgebildetes und mit dem Engineering-Modul (30) zum Empfang der Projektierungsdaten sowie mit dem Entwurfsmodul (10)zur Übertragung simulierter Prozessdaten verbundenes Simulationsmodul (50)umfasst.

## Beschreibung

Die vorliegende Erfindung betrifft eine Entwurfsvorrichtung zum Entwerfen einer leittechnischen Anlage mit Automatisierungssoftware und -Hardware zum automatisierten Betrieb eines Prozesses. Außerdem betrifft die Erfindung ein Verfahren zum Überprüfen der technologischen Aufgabenstellung beim Entwurf einer leittechnischen Anlage bei Vorliegen einer Automatisierungssoftware in einem Entwurfsmodul.

Im Verlauf der Bearbeitung leittechnischer Anlagen können den Bearbeitern in jeder Phase der Bearbeitung Fehler unterlaufen. Bereits während der Aufgabenklärung, der Entwurfsphase, der Projektierung oder aber bei der Inbetriebsetzung (IBS) können Fehler unterlaufen.

Beim Erstellen und Inbetriebsetzen leittechnischer Anlagen, insbesondere in der Kraftwerksleittechnik, gilt im Allgemeinen, dass der Aufwand für die Fehlerbehebung in einer frühen Phase der Bearbeitung deutlich geringer ist, als in einer späten Phase. Grundsätzlich gilt, je früher ein Fehler erkannt und behoben wird, desto geringer sind die Kosten für die Fehlerbeseitigung. Besonders aufwendig wird das Beheben eines Fehlers, wenn der Fehler erst während des Betriebs der Anlage erkannt wird. Betriebsstillstand und Produktionsausfall sind dann die Folge. Im Kraftwerksbereich können dann Ausfallkosten von bis zu 100.000 EURO pro Stunde auftreten.

Bei der Definition der technologischen Aufgabenstellung für leittechnische Anlagen gibt es bisher keine Möglichkeit, Fehler in der Aufgabenstellung zu erkennen und die Fehlerfreiheit der Aufgabenstellung sicherzustellen. Es war bisher nicht möglich, die Funktion und Vollständigkeit der definierten Aufgabenstellung abzusichern. Durchgängige, auf Datenverarbeitung gestützte Verfahren sind nicht verfügbar. Die Aufgabenstellung wird bisher entweder "auf Papier" oder mit Hilfe von isolierten CAD-Verfahren (CAD: Computer Aided Design) formuliert. Fehler, die in dieser Phase entstehen, können nicht unmittelbar erkannt werden, sondern werden mit Hilfe aufwendiger Tests in späteren Phasen der Bearbeitung einer leittechnischen Anlage oder gar erst bei Inbetriebsetzung der leittechnischen Anlage aufgefunden.

In den späten Phasen der Bearbeitung einer leittechnischen Anlage ist die Automatisierung bereits vollständig realisiert. Unter Automatisierung sollen hierbei Automatisierungssoft- und Hardware zum automatisierten Betrieb eines Prozesses, beispielsweise eines Gasturbinenprozesses, zu verstehen sein. Abhängig von der Bearbeitungsphase, in der sich die leittechnische Anlage bei der Fehlerbeseitigung in der Automatisierung befindet, steigt der Aufwand für das Beheben des Fehlers. Insbesondere, wenn der Fehler erst in der verfahrenstechnischen Inbetriebsetzung zu beheben ist, welche die späteste Phase der Bearbeitung der leittechnischen Anlage darstellt, ist die Korrektur eines Fehlers in der Automatisierung mit großem Aufwand verbunden, da zu diesem Zeitpunkt sowohl Hard- als auch Software bereits auf der Basis der ursprünglichen Aufgabenstellung vollständig fertiggestellt sind und geprüft wurden.

Aufgabe der vorliegenden Erfindung ist es daher, eine Vorrichtung und ein Verfahren zur Verfügung zu stellen, mit der bzw. mit dem sich Fehler in der Automatisierung einer leittechnischen Anlage möglichst früh auffinden lassen.

Die genannte Aufgabe wird durch eine Entwicklungsvorrichtung nach Anspruch 1 sowie durch ein Verfahren nach Anspruch 7 gelöst. Die abhängigen Ansprüche enthalten vorteilhafte Ausgestaltung der erfindungsgemäßen Entwicklungsvorrichtung bzw. des erfindungsgemäßen Verfahrens.

Eine erfindungsgemäße Entwurfsvorrichtung zum Entwerfen einer leittechnischen Anlage mit Automatisierungssoftware und -hardware zum automatisierten Betrieb eines Prozesses umfasst:
- Ein zum Entwurf der Automatisierungssoftware ausgebildetes Entwurfsmodul,
- einen mit dem Entwurfsmodul zum Empfang der Automatisierungssoftware in Verbindung stehendes Engineering-Modul, welches zum Projektieren der Automatisierungshardware auf der Basis der Automatisierungssoftware und zum Ausgeben von Projektierungsdaten an die Automatisierungshardware ausgestaltet ist, und
- ein zum Simulieren der Automatisierungshardware und des Prozesses ausgebildetes und mit dem Engineering-Modul zum Empfang der Projektierungsdaten sowie mit dem Entwurfsmodul zur Übergabe simulierter Prozessdaten verbundenes Simulationsmodul.

Unter Projektieren soll im Rahmen dieser Beschreibung das Konfigurieren, Parametrisieren und Programmieren der Automatisierungshardware auf der Basis der Automatisierungssoftware zu verstehen sein.

Das Entwurfsmodul kann ein Technologieplan-Entwurfsmodul umfassen, das zum Entwurf eines Technologieplanes ausgebildet ist, d.h. zum Entwurf eines Übersichtsplanes, der sowohl die verfahrenstechnischen Komponenten als auch die leittechnischen Komponenten vorzugsweise graphisch darstellt. Das Technologieplan-Entwurfsmodul steht mit einem Konverter in Verbindung, der zum Konvertieren des Technologieplanes in die für die zu entwerfende leittechnische Anlage spezifische Automatisierungssoftware und zur Ausgabe der Automatisierungssoftware an das Engineering-Modul ausgestaltet ist, welches insbesondere den Programmcode für die Automatisierungshardware erzeugt. Der Konverter kann eine selbständige Einheit oder ein in das Entwurfsmodul integriertes Konvertermodul sein.

Insbesondere kann der Konverter als anlagenspezifische Automatisierungssoftware sog. Funktionspläne der Einzelebene generieren, welche für die zu entwerfende leittechnische Anlage spezifisch sind und Einzelsequenzen der Automatisierungssoftware repräsentieren. Aus den in den Funktionsplänen der Einzelebene vorzugsweise graphisch dargestellten Einzelsequenzen erzeugt das Engineering-Modul dann den Programmcode für die Automatisierungshardware.

In der erfindungsgemäßen Entwurfsvorrichtung kann das Simulationsmodul entweder direkt oder indirekt, beispielsweise über das Engineering-Modul, zur Übergabe simulierter Prozessdaten mit dem Entwurfsmodul verbunden sein.

Die erfindungsgemäße Entwurfsvorrichtung ermöglicht eine enge Kopplung eines Entwurfsmoduls zum Entwerfen von Automatisierungssoftware oder Technologieplänen mit einem Prozesssimulator. Hierdurch wird es möglich, bereits in der Definitionsphase der technologischen Aufgabenstellung diese auf Korrektheit und Vollständigkeit zu überprüfen. Die Integration des Simulators ermöglicht es, den gewählten Technologieplan dahingehend zu überprüfen, ob dieser in der gewünschten Art und Weise funktioniert.

Aufgrund des Durchführens einer Simulation bereits auf der Basis der Automatisierungssoftware oder vorzugsweise auf der Basis des Technologieplanes kann die Auswirkung von Fehlern auf den technologischen Prozess unmittelbar erkannt und danach umgehend behoben werden. Selbst fehlende Messstellen und Aktoren in der leittechnischen Anlage, die für die Prozessautomatisierung erforderlich sind, können mit der Simulation unmittelbar erkannt werden. Dies ermöglicht das frühzeitige Einleiten von Korrekturen.

Das Ergebnis der Überprüfung einer Automatisierungssoftware oder eines Technologieplanes mittels der Simulation kann im Entwurfsmodul angezeigt werden. Insbesondere beim Überprüfen eines Technologieplanes kann ein erkannter Fehler dann unmittelbar durch Korrektur des Technologieplanes behoben werden und nicht wie bisher erst iterativ in späteren Phasen, in denen die Automatisierungssoftware und unter Umständen sogar bereits die Automatisierungshardware vollständig realisiert sind. Diese frühzeitige Korrektur verbessert die Qualität der Projektierungsergebnisse. Kosten können gesenkt werden, und die Durchlaufzeit bei der Anlagenbearbeitung kann aufgrund einer verkürzten Testphase reduziert werden. Zudem lässt sich das Risiko von Fehlern im laufenden Betrieb minimieren.

In einer vorteilhaften Weiterbildung der Entwurfsvorrichtung umfasst das Entwurfsmodul eine Grafikoberfläche und eine grafische Darstellungseinheit zum Darstellen der simulierten Prozessdaten. Mittels der grafischen Darstellungseinheit und der Grafikoberfläche können selbst komplexe Strukturen anschaulich dargestellt werden. Außerdem lassen sich die Wirkungen der leittechnischen Funktion auf den Prozess anschaulich verdeutlichen.

Das Entwurfsmodul kann mit dem Simulationsmodul zum Empfang der simulierten Prozessdaten über eine Schnittstelle, insbesondere über eine auf einer Datenbank basierenden Schnittstelle, in Verbindung stehen. Auf diese Weise kann die Kopplung zwischen dem Simulationsmodul und dem Entwurfsmodul weitgehend automatisch erfolgen.

In einer weiteren vorteilhaften Ausgestaltung der erfindungsgemäßen Entwurfsvorrichtung umfasst diese einen Speicher zum Speichern der vom Entwurfsmodul empfangenen simulierten Prozessdaten. Das Speichern simulierter Prozessdaten ermöglicht die durchgängige Nutzung der vom Entwurfsmodul empfangenen Prozessdaten über alle Phasen der Projektierung und der Inbetriebsetzung bis hin zum Betrieb der leittechnischen Anlage. Dies gewährleistet die Konsistenz der simulierten Daten während des gesamten Prozesses. Die geprüfte Qualität der Aufgabenstellung lässt sich damit in alle Phasen der Realisierung der leittechnischen Anlage übernehmen.

Das erfindungsgemäße Verfahren zum Überprüfen der technologischen Aufgabenstellung beim Entwurf einer leittechnischen Anlage bei Vorliegen einer Automatisierungssoftware in einem Entwurfsmodul umfasst die Schritte:
- Erstellen oder Aufrufen einer Simulationsumgebung, welche die zur Automatisierungssoftware gehörende Automatisierungshardware sowie den zu steuernden Prozess simuliert,
- Emulieren der Automatisierungssoftware in der Simulationsumgebung zum Erzeugen simulierter Prozessdaten und
- Darstellen der simulierten Prozessdaten im Entwurfsmodul.

Das erfindungsgemäße Verfahren ermöglicht das Überprüfen der technologischen Aufgabenstellung für die leittechnische Anlage bereits zu einem frühen Zeitpunkt des Entwicklungsprozesses.

Wenn die Automatisierungssoftware beim Überprüfen der technologischen Aufgabenstellung noch im Stadium eines Technologieplanes ist und das Verfahren einen Schritt des Konvertierens des Technologieplanes in die spezifische Automatisierungssoftware umfasst, ist eine Überprüfung der technologischen Aufgabenstellung in einer besonders frühen Entwurfsphase möglich. Insbesondere kann der Technologieplan in eine Anzahl Funktionspläne der Einzelebene konvertiert werden, welche die anlagenspezifische Automatisierungssoftware repräsentieren.

Zur anschaulichen Darstellung auch komplexer Strukturen können die simulierten Prozessdaten grafisch dargestellt werden.

In einer vorteilhaften Weiterbildung des erfindungsgemäßen Verfahrens, welche eine durchgängige Nutzung der erfassten Prozessdaten über alle Phasen der Projektierung und der Inbetriebsetzung einer leittechnischen Anlage ermöglicht, werden die simulierten Prozessdaten gespeichert.

Das Verfahren bietet insgesamt die mit Bezug auf die Entwicklungsvorrichtung genannten Vorteile.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.

Fig. 1 zeigt ein erstes Ausführungsbeispiel für eine erfindungsgemäße Entwicklungsvorrichtung in Form eines Blockdiagramms.

Fig. 2 zeigt ein zweites Ausführungsbeispiel für eine erfindungsgemäße Entwicklungsvorrichtung in Form eines Blockdiagramms.

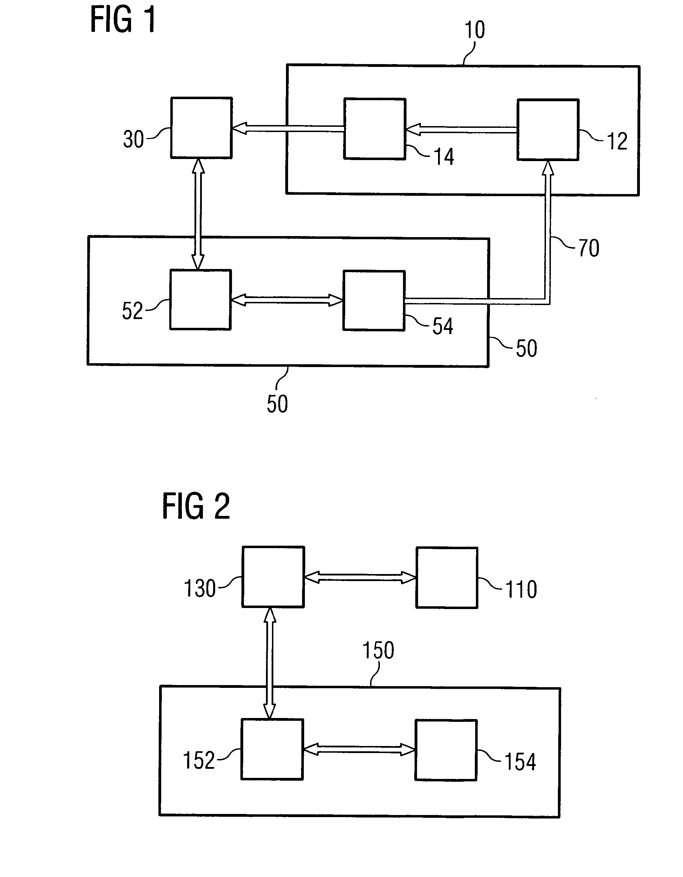

Ein erstes Ausführungsbeispiel für die erfindungsgemäße Entwicklungsvorrichtung ist in Figur 1 in Form einer Blockdiagramms dargestellt. Die Vorrichtung umfasst ein Entwurfsmodul 10 zum Entwurf der Automatisierungssoftware für eine leittechnische Anlage mit einer Automatisierungshardware. Außerdem umfasst sie ein zum Empfang der Automatisierungssoftware mit dem Entwurfsmodul 10 verbundenes Engineering-Modul 30, das zum Projektieren, d.h. zum Konfigurieren, Parametrisieren und Programmieren der Automatisierungshardware auf der Basis der Automatisierungssoftware ausgebildet ist. Schließlich umfasst die Entwicklungsvorrichtung ein Simulationsmodul 50, das zum Simulieren sowohl der Automatisierungshardware als auch des zu steuernden Prozesses ausgebildet ist.

Das Entwurfsmodul 10 ist im vorliegenden Ausführungsbeispiel ein Technologieeditor, der eine durchgängige Verbindung zwischen der Leittechnik und der Anlage bereitstellt. Dieser umfasst zwei Komponenten, nämlich ein Technologieplan-Entwurfsmodul 12, welches dem Entwickler eine bestimmte technologische Funktionalität zur Verfügung stellt, die unabhängig von der Automatisierungshardware ist, für die eine Automatisierungssoftware entwickelt werden soll. Der Entwickler kann somit Technologiepläne für die Anlage aus einer rein technologischen Sichtweise erstellen, ohne Spezialist in demjenigen Automatisierungssystem zu sein, für das die Software zu erstellen ist. Der Technologieeditor 12 kann beispielsweise auf Microsoft-Standard-Komponenten (VISIO) basieren und stellt ein äußerst flexibles Werkzeug mit hoher Funktionalität zur Verfügung, welches zudem mit einer intuitiven Oberfläche ausgestaltet sein kann, sodass es einfach und ohne Spezialwissen zu bedienen ist.

Das Umwandeln des unspezifischen Technologieplanes in eine für die ausgewählte Automatisierungshardware spezifische Automatisierungssoftware erfolgt in einem mit dem Technologieeditor 12 verbundenen Konverter 14. Der Konverter 14 ist im vorliegenden Ausführungsbeispiel als sog. Funktionsplangenerator ausgestaltet, der aus dem Technologieplan eine Anzahl Funktionspläne der Einzelebene generiert. Diese repräsentieren Einzelsequenzen der anwenderspezifische Automatisierungssoftware in einer graphischen Darstellung.

Über den Konverter 14 steht das Entwurfsmodul 10 mit dem Engineering-Modul 30, das bereits ein Teil des Automatisierungssystems darstellt, in Verbindung. Das Engineering-Modul 30 empfängt vom Konverter 14 die spezifische Automatisierungssoftware und generiert aus den Funktionsplänen der Einzelebene die Einzelsequenzen des Programmcodes der Leittechnik. Mit Hilfe des Engineering-Moduls 30 kann die Automatisierungshardware konfiguriert, parametrisiert und programmiert werden.

Das Engineering-Modul 30 steht außer mit dem Konverter 14 des Entwurfsmoduls 10 mit dem Simulationsmodul 50 in Verbindung. In der erfindungsgemäßen Entwicklungsvorrichtung wird statt der realen Automatisierungshardware eine simulierte Automatisierungshardware auf der Basis der Automatisierungssoftware projektiert.

Zum Simulieren der Automatisierungshardware umfasst das Simulationsmodul 50 ein Hardware-Simulationsmodul 52, welches zum Empfang der Projektierungsdaten mit dem Entwicklungsmodul 30 in Verbindung steht. Darüber hinaus umfasst das Simulationsmodul 50 ein Prozess-Simulationsmodul 54, welches mit dem Hardware-Simulationsmodul 52 in Verbindung steht und zur Simulation des zu steuernden Prozesses dient. Sowohl das Hardware-Simulationsmodul 52 als auch das Prozess-Simulationsmodul 54 können sowohl in Form von Hardware als auch in Form von Software realisiert sein.

Das Simulationsmodul 50 begleitet das Automatisierungssystem in der Regel während des gesamten Lebenszyklus. Außer beim Anlagendesign kommt es auch beim Anlagentest und zum Schulen des Bedienpersonals zum Einsatz.

Mit dem über das Simulationsmodul 50 möglichen Simulation Based Engineering besteht die Möglichkeit, die Automatisierungssoftware bereits zu einem Zeitpunkt zu testen, zu dem noch keine Automatisierungshardware vorhanden oder projektiert ist. Die Automatisierungssoftware wird dabei ebenso wie der Prozess im Simulationsmodul 50 emuliert, d.h. der für die Automatisierungshardware erstellte Programmcode der Automatisierungssoftware wird in simulierter Umgebung, vorzugsweise in einer Softwareumgebung zum Ablauf gebracht.

Zum Erstellen von Prozessmodellen für die Prozesssimulation kann das Simulationsmodul 50 eine Bedienoberfläche zur Verfügung stellen, mit der sich unter Zuhilfenahme von branchenspezifischen Bibliotheken Prozessmodelle erstellen lassen. Es kann außerdem ein Speicher vorhanden sein (nicht dargestellt), in dem sich einmal erstellte Prozessmodelle speichern lassen. Wenn die Komponenten eines Prozessmodells parametrisierbar sind, kann zudem eine einfache Anpassung des Prozesses durch geeignete Wahl der Parameter erfolgen.

Das Prozess-Simulationsmodul 54 steht zur Ausgabe von Prozessdaten über einen Datenbus 70 mit dem Technologieplan-Entwurfsmodul 12 des Entwurfsmoduls 10 in Verbindung. Auf diese Weise können die Prozessdaten im Technologieplan-Entwurfsmodul 12 eingeblendet werden.

Zum Testen des Technologieplanes wird dieser an den Konverter 14 weitergegeben, der ihn in eine für das Engineering-Modul 30, das ja bereits einen Teil des spezifischen Automatisierungssystems darstellt, spezifische Funktionspläne umwandelt, also in die spezifische Automatisierungssoftware. Die Automatisierungssoftware gibt der Konverter 14 dann an das Engineering-Modul 30 aus, welches anschließend die im Hardware-Simulationsmodul 52 simulierte Automatisierungshardware auf der Basis der empfangenen Automatisierungssoftware projektiert. Mit der im Hardware-Simulationsmodul 52 projektierten Automatisierungshardware erfolgt dann ein Betrieb des im Prozess-Simulationsmodul 54 simulierten Prozesses. Die aus dieser Simulation resultierenden Prozessdaten werden dann über den Datenbus 70 an das Technologieplan-Entwurfsmodul 12 weitergegeben, wo sie beispielsweise mittels einer grafischen Oberfläche zusammen mit dem Technologieplan grafisch dargestellt werden. Auf diese Weise kann der Entwickler bereits in einem sehr frühen Stadium seinen Technologieplan testen und gegebenenfalls auf der Basis des Tests Änderungen am Technologieplan vornehmen, bevor die reale Automatisierungshardware projektiert wird.

Das enge Zusammenwirken zwischen dem Entwurfsmodul 10 und dem Simulationsmodul 50 liefert eine Plattform, die es dem Technologen auf einfache Art und Weise ermöglicht, das Erstellen von Regelungs- und Automatisierungsplänen in einem geschlossenen Wirkkreis zu testen. Die Kopplung zwischen dem Entwurfsmodul 10 und dem Simulationsmodul 50 erfolgt im vorliegenden Ausführungsbeispiel mittels einer auf einer Datenbank basierenden Schnittstelle.

Ein zweites Ausführungsbeispiel für die erfindungsgemäße Entwicklungsvorrichtung ist in Figur 2 dargestellt. Das in Figur 2 dargestellte Ausführungsbeispiel unterscheidet sich vom in Figur 1 dargestellten Ausführungsbeispiel dadurch, dass das Entwurfsmodul 110 kein Technologieplan-Entwicklungsmodul und keinen Konverter aufweist. Stattdessen ist es dazu ausgebildet, eine bereits für das Automatisierungssystem spezifische Automatisierungssoftware zu entwickeln. Dies kann unter Umständen für einen Entwickler, der in der Entwicklung von Software für eine spezifische Automatisierungshardware erfahren ist, günstig sein. Die mit dem Entwurfsmodul 110 entworfenen anlagenspezifische Software kann dann ohne Zwischenschaltung eines Konverters an das Engineering-Modul 130 ausgegeben werden. Das Engineering-Modul 130 des zweiten Ausführungsbeispiels unterscheidet sich nicht vom Engineering-Modul 30 des ersten Ausführungsbeispiels.

Das Simulationsmodul 150 des zweiten Ausführungsbeispiels unterscheidet sich vom Simulationsmodul 50 des ersten Ausführungsbeispiels dadurch, dass das keine direkte Verbindung mit dem Entwurfsmodul 110 aufweist. Im zweiten Ausführungsbeispiel werden daher die vom Prozess-Simulator 154 ausgegebenen Prozessdaten über das Hardware-Simulationsmodul 152 und das Engineering-Modul 130 an das Entwurfsmodul 110 ausgegeben.

Das erfindungsgemäße Entwicklungssystem kann bereits zu einem Zeitpunkt in das Leittechniksystem integriert werden, zu dem noch keine Automatisierungshardware vorhanden ist. Dadurch wird es möglich, eine vollständige, konsistente und in ihren Funktion geprüfte Aufgabenstellung für die Leittechnik zu erhalten, deren Struktur und Konfigurationsdaten durchgängig sind und in allen Entwicklungsphasen bis hin zur Inbetriebsetzung und dem eigentlichen Betrieb automatisch übernommen werden können.

Die erfindungsgemäße Entwicklungsvorrichtung ermöglicht zudem eine Offline-Analyse des Anlagendesigns in jedem Stadium des Entwurfs und des Betriebs der Anlage. Auftraggeber und Auftragnehmer können so zu jedem Zeitpunkt Änderungen kontrolliert einbringen und auf ihre Realisierbarkeit hin überprüfen. Änderungsnachweise können geführt und ein Nachweis von Zusatzaufwendungen kann unstrittig erfolgen. Zudem kann ein Nachweis der Gesamtfunktionalität der gewählten Automatisierungslösung erbracht werden.

## Patentansprüche

1. Entwicklungsvorrichtung zum Entwerfen einer leittechnischen Anlage mit Automatisierungssoftware und -hardware zum automatisierten Betrieb eines Prozesses, wobei die Entwurfsvorrichtung
- ein zum Entwurf der Automatisierungssoftware ausgebildetes Entwurfsmodul (10, 110),
- ein mit dem Entwurfsmodul (10, 110) zum Empfang der Automatisierungssoftware verbundenes Engineering-Modul (30, 130), welches zum Projektieren der Automatisierungshardware auf der Basis der Automatisierungssoftware und zum Ausgeben von Projektierungsdaten an die Automatisierungshardware ausgestaltet ist, und
- ein zum Simulieren der Automatisierungshardware und des Prozesses ausgebildetes und mit dem Engineering-Modul (30, 130) zum Empfang der Projektierungsdaten sowie mit dem Entwurfsmodul (10, 110) zur Übertragung simulierter Prozessdaten verbundenes Simulationsmodul (50, 150) umfasst.

2. Entwicklungsvorrichtung nach Anspruch 1, bei dem das Entwurfmodul (10) ein zum Entwurf eines Technologieplans ausgebildetes Technologieplan-Entwurfsmodul (12) und einen mit dem Technologieplan-Entwurfsmodul (12) zum Empfang des Technologieplanes in Verbindung stehenden Konverter (14) umfasst, der zum Konvertieren von Technologieplänen in spezifische Automatisierungssoftware für die zu entwerfende leittechnische Anlage und zur Ausgabe der Automatisierungssoftware ausgestaltet ist.

3. Entwicklungsvorrichtung nach Anspruch 1 oder 2, bei der das Entwurfsmodul (10, 110) eine Grafikoberfläche und eine grafische Darstellungseinheit zum Darstellen der simulierten Prozessdaten umfasst.

4. Entwicklungsvorrichtung nach einem der vorangehenden Ansprüche, bei der das Entwurfsmodul (10, 110) mit dem Simulationsmodul (50, 150) zum Empfang der simulierten Prozessdaten über eine Schnittstelle in Verbindung steht.

5. Entwicklungsvorrichtung nach Anspruch 4, **dadurch gekennzeichnet, dass** die Schnittstelle auf einer Datenbank basiert.

6. Entwicklungsvorrichtung nach einem der vorangehenden Ansprüche, bei dem ein Speicher zum Speichern der vom Entwurfsmodul (10,110) empfangenen simulierten Prozessdaten vorhanden ist.

7. Verfahren zum Überprüfen der technologischen Aufgabestellung beim Entwurf einer leittechnischen Anlage bei Vorliegen einer Automatisierungssoftware in einem Entwurfsmodul (100,110), mit den Schritten:
- Erstellen oder Aufrufen einer Simulationsumgebung, welche die zur Automatisierungssoftware gehörende Automatisierungshardware sowie den zu steuernden Prozess simuliert,
- Emulieren der Automatisierungssoftware in der Simulationsumgebung zum Erzeugen simulierter Prozessdaten und
- Darstellen der simulierten Prozessdaten im Entwurfsmodul (10, 110).

8. Verfahren nach Anspruch 7, in dem die Automatisierungssoftware im Entwurfsmodul (10) in Form eines Technologieplanes vorliegt und in dem vor dem Emulieren ein Konvertieren des Technologieplanes in eine für die leittechnische Anlage spezifische Automatisierungssoftware erfolgt.

9. Verfahren nach Anspruch 8, **dadurch gekennzeichnet, dass** der Technologieplan in eine Anzahl Funktionspläne konvertiert wird, welche die anlagenspezifische Automatisierungssoftware repräsentieren.

10. Verfahren nach einem der Ansprüche 7 bis 9, bei dem die simulierten Prozessdaten grafisch dargestellt werden.

11. Verfahren nach einem der Ansprüche 7 bis 10, bei dem die simulierten Prozessdaten gespeichert werden.
